# EUROPEAN PATENT APPLICATION

(11) **EP 4 779 454 A2**
(43) Date of publication of application: **22.07.2026**
(21) Application number: 26179149.5
(22) Date of filing: 18.05.2026
(51) Int. Cl.: G06F 3/12, B29C 64/259, B33Y 10/00

(54) **PRINTING METHOD BASED ON CONSUMABLE MANAGEMENT, PRINTING SYSTEM, AND PRINTING DEVICE**

(30) Priority: 21.11.2025 CN 202511724597
(71) Applicant: Shining 3D Tech Co., Ltd., Hangzhou, Zhejiang 311258 (CN)
(72) Inventor: ZHENG, Zhishun, Hangzhou, 311258 (CN); ZHAO, Xiaobo, Hangzhou, 311258 (CN); CHEN, Da, Hangzhou, 311258 (CN); HE, Junlin, Hangzhou, 311258 (CN)
(74) Representative: Dai, Simin

(57) **Abstract**

A printing method based on consumable management, a printing system, and a printing device are provided. The method is applied to the printing device including an image sensor and/or a near-field sensing component, and includes: receiving a print job; performing first identification on an image label of a consumable container by using the image sensor, to obtain first consumable identity information corresponding to the image label, and/or performing second identification on a near-field sensing tag of the consumable container by using the near-field sensing component, to obtain second consumable identity information corresponding to the near-field sensing tag; performing consumable verification based on the first consumable identity information and/or the second consumable identity information; and performing, by the printing device, the print job in response to a verification result being compatible with the print job.

## Description

### TECHNICAL FIELD

This application relates to the field of 3D printing technologies, and in particular, to a printing method based on consumable management, a printing system, and a printing device.

### BACKGROUND

Additive manufacturing (e.g., three-dimensional (3D) printing) provides techniques to manufacture objects by solidifying portions of build material at specific locations. Additive manufacturing techniques may include stereolithography (SLA), digital light processing (DLP), selective or fused deposition modeling, direct composite manufacturing, laminated object manufacturing, selective phase zone deposition, multiphase jet solidification, ballistic particle manufacturing, particle deposition, laser sintering, or combinations thereof.

In a method or system involving stereolithography or digital light processing in additive manufacturing, a resin or photopolymer is used as a consumable, for example, a resin container may be used to contain or hold the consumable, and it is desirable to track the effective date, lifetime, number of uses, remaining amount, or the like, of the resin or photopolymer in the resin container.

### SUMMARY

The main purpose of the embodiments of the present application is to provide a printing method, a printing system and a printing device based on consumable management, which realize the verification and accurate identification of consumable identity through identification and verification mechanisms utilizing image and/or near-field sensing, thereby improving the system reliability.

In a first aspect, an embodiment of this application provides a printing method based on consumable management, applied to a printing device, where the printing device includes an image sensor and/or a near-field sensing component, the method includes:
receiving a print job;
performing first identification on an image label of a consumable container by using the image sensor to obtain first consumable identity information corresponding to the image label, and/or performing second identification on a near-field sensing tag of the consumable container by using the near-field sensing component to obtain second consumable identity information corresponding to the near-field sensing tag;
performing consumable verification based on the first consumable identity information and/or the second consumable identity information; and
executing, by the printing device, the print job in response to a verification result being compatible with the print job.

In a second aspect, an embodiment of this application provides a printing system, including a printing device and an electronic device communicatively coupled to the printing device, where the printing device includes an image sensor and/or a near-field sensing component, and the printing device is configured to:
receive a print job transmitted by the electronic device;
perform first identification on an image label of a consumable container by using the image sensor to obtain first consumable identity information corresponding to the image label, and/or perform second identification on a near-field sensing tag of the consumable container by using the near-field sensing component to obtain second consumable identity information corresponding to the near-field sensing tag;
perform consumable verification based on the first consumable identity information and/or the second consumable identity information; and
execute, by the printing device, the print job in response to a verification result being compatible with the print job;
the electronic device is configured to:
   transmit the print job to the printing device.

In a third aspect, an embodiment of this application provides a printing method, applied to a printing system, where the printing system includes a printing device and an electronic device communicatively coupled to the printing device, the printing device includes an image sensor and/or a near-field sensing component, and the method includes:
transmitting, by the electronic device, a print job to the printing device;
receiving, by the printing device, the print job transmitted by the electronic device;
performing, by the printing device, first identification on an image label of a consumable container by using the image sensor to obtain first consumable identity information corresponding to the image label, and/or performing, by the printing device, second identification on a near-field sensing tag of the consumable container by using the near-field sensing component to obtain second consumable identity information corresponding to the near-field sensing tag;
performing, by the printing device, consumable verification based on the first consumable identity information and/or the second consumable identity information; and
executing, by the printing device, the print job in response to a verification result being compatible with the print job.

In a fourth aspect, an embodiment of this application provides a printing device, including at least one processor and a memory;
the memory stores computer-executable instructions;
when the computer-executable instructions stored in the memory are executed by the processor, the processor is caused to perform the method according to the first aspect.

In a fifth aspect, an embodiment of this application provides a non-transitory computer-readable storage medium storing computer-executable instructions, where when the computer-executable instructions are executed by a processor, the method according to the first aspect or the third aspect is implemented.

In a sixth aspect, an embodiment of this application provides a computer program product, including a computer program, where when the computer program is executed by a processor, the method according to the first aspect or the third aspect is implemented.

According to the printing method based on consumable management, the printing system, and the printing device provided in the embodiments of this application, when a print job is received, first identification is performed on an image label of a consumable container by using an image sensor, to obtain first consumable identity information, and/or second identification is performed on a near-field sensing tag of the consumable container by using a near-field sensing component, to obtain second consumable identity information. Subsequently, consumable verification is performed based on the first consumable identity information and/or the second consumable identity information, and the print job is performed in response to the verification result being compatible with the print job. In this way, by performing the identification operation on the image label and/or the near-field sensing tag of the consumable container, the verification and cross-verification of the identity information of the consumable is realized, the accuracy of identity identification is improved, the risk of single identification failure or information tampering is eliminated, and the reliability and security of the print job can be effectively improved.

### BRIEF DESCRIPTION OF DRAWINGS

The accompanying drawings, which are incorporated in and constitute a part of this specification, illustrate embodiments consistent with the present application and, together with the description, serve to explain the principles of the present application. Apparently, the accompanying drawings in the following description are some embodiments of the present application, and a person of ordinary skill in the art may further obtain other accompanying drawings based on these accompanying drawings without creative efforts.
FIG. 1 is a schematic diagram of a hardware architecture of a printing device according to an embodiment of this application.
FIG. 2 is a schematic diagram of an application scenario of a printing method based on consumable management according to an embodiment of this application.
FIG. 3 is a schematic flowchart of a printing method based on consumable management according to an embodiment of this application.
FIG. 4 is a schematic diagram of a mechanical structure of a printing device according to an embodiment of this application.
FIG. 5 is a schematic structural diagram of a printing apparatus based on consumable management according to an embodiment of this application.

Specific embodiments of this application have been shown through the above drawings, which will be described in more detail below. These drawings and text descriptions are not intended to limit the scope of the concept of this application in any way, but to illustrate the concept of this application for those skilled in the art by referring to specific embodiments.

### DETAILED DESCRIPTION

Reference will now be made in detail to exemplary embodiments, examples of which are illustrated in the accompanying drawings. When the following description refers to the accompanying drawings, unless otherwise indicated, the same numbers in different drawings indicate the same or similar elements. The implementations described in the following exemplary embodiments do not represent all implementations consistent with this application.

The term "and/or" in this specification is used to describe an association relationship between associated objects, and specifically indicates that three relationships may exist, for example, A and/or B may indicate three cases: A exists alone, both A and B exist, and B exists alone.

Additive manufacturing (e.g., three-dimensional (3D) printing) provides techniques to manufacture objects by solidifying portions of build material at specific locations. Additive manufacturing techniques may include stereolithography (SLA), digital light processing (DLP), selective or fused deposition modeling, direct composite manufacturing, laminated object manufacturing, selective phase zone deposition, multiphase jet solidification, ballistic particle manufacturing, particle deposition, laser sintering, or combinations thereof.

Devices involved in stereolithography or digital light processing of additive manufacturing, such as 3D printing devices, have been widely used in the fields of personalized production, precision medical treatment and high-end manufacturing, for example, more and more 3D printing devices are used to print teeth, crowns or veneers of dental patients in the dental field.

The printing method based on consumable management according to the embodiments of this application may be applied to a field scenario in which, for example, a 3D printing device using stereolithography or digital light processing technology performs identity identification on a consumable container to control printing.

It can be understood that the consumable container is usually a container produced by, for example, a manufacturer of the 3D printing device or a consumable manufacturer, containing a certain amount of printing consumable such as photocurable resin or other photosensitive polymers. The consumable container is usually made of resin or other suitable materials to form a housing that accommodates the printing consumable.

In some examples, the 3D printing device may include a built-in pump/suction tube system, and the bottom of the consumable container is designed with a pipeline that mates with the pump/suction tube system. This allows that after the bottom of the consumable container is connected to the 3D printing device, the 3D printing device may draw resin from the consumable container via the pump and inject the resin into the resin tank.

In other examples, the consumable container may be a capsule-type consumable container, including, for example, a cylindrical outer housing and an inner housing that mates with the outer housing. The inner housing is configured to be able to move freely within the outer housing to form a build platform for printing a model. The printing consumable is accommodated in the inner housing and continuously flows out of the inner housing and is injected into the build platform as the print job proceeds.

It can be understood that the 3D printing device relies on its dedicated consumable (such as specifically formulated photosensitive resin, color ink, biological material, etc.), and the physical properties, chemical compatibility and batch-to-batch consistency of the consumable directly determine the molding quality, color accuracy and even the physiological influence on the organisms of the final product. Therefore, a set of effective and reliable systems for consumable identity authentication, lifecycle management and traceability are constructed to fundamentally prevent the use of unauthorized, counterfeit, invalid, out-of-date, or parameter-incompatible consumable, which will ensure the success rate of 3D print jobs and maintain the safe operation of the 3D printing device.

In order to solve at least one of the above problems, embodiments of this application provide a printing method based on consumable management, a printing system, and a printing device, which determine identity information of a consumable container through image recognition and/or near-field induction, and perform verification based on the identity information of the consumable and a print job.

The following describes some implementations of this application in detail with reference to the accompanying drawings. The following embodiments and features in the embodiments may be combined with each other if there is no conflict between the embodiments. In addition, a sequence of steps in the following method embodiments is merely an example, and is not strictly limited.

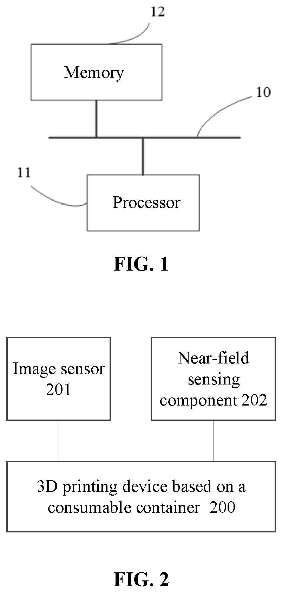

FIG. 1 is a schematic diagram of the hardware architecture of a printing device provided in an embodiment of the present application. As shown in FIG. 1, this embodiment provides a printing device 1, including at least one processor 11 and a memory 12, and one processor is taken as an example in FIG. 1. The processor 11 and the memory 12 are connected via a bus 10. The memory 12 stores computer-executable instructions that can be executed by the processor 11. The computer-executable instructions are executed by the processor 11, so that the printing device 1 can execute all or part of the processes of the printing method based on consumable management in any one of the following embodiments, so as to achieve identification verification and legal compatibility determination of consumable identity, thereby effectively improving system reliability while avoiding risks such as single identification failure, information tampering, and counterfeit consumable.

FIG. 2 is a schematic diagram of an application scenario of a printing method based on consumable management according to an embodiment of this application. As shown in FIG. 2, the method of the embodiment of the present application can be used in a 3D printing system scenario based on a consumable container, such as a capsule-type consumable container. The method or steps of the embodiment of the present application can be performed by an electronic device to ensure authentic verification and proper compatibility of dedicated and high-precision consumable (such as specifically formulated engineering plastic or resin capsules).

At present, in a 3D printing system scenario based on a capsule-type consumable container such as a resin capsule, the consumable capsule typically adopts a plug-and-play integrated sealing design.

When applying the method of the present application, after receiving a 3D print job, a 3D printing device 200 first performs first identification on an image label (such as a two-dimensional barcode) on the outer housing of the inserted resin capsule through an image sensor 201 to obtain first consumable identity information. At the same time, second identification may also be performed on a near-field sensing tag built in the capsule through a near-field sensing component (such as an NFC reader/writer) 202 to obtain second consumable identity information. Consumable verification is performed based on any piece of consumable identity information. If the verification result is compatible with the print job, the printing device starts the printing process and controls the mechanical structure to accurately operate the capsule-type consumable to complete the 3D printing. By applying the method of the present application, in a 3D printing scenario based on a capsule-type consumable, the stability of identity information acquisition is ensured by image recognition and/or near-field sensing identification, and the capsule-type consumable can be effectively managed.

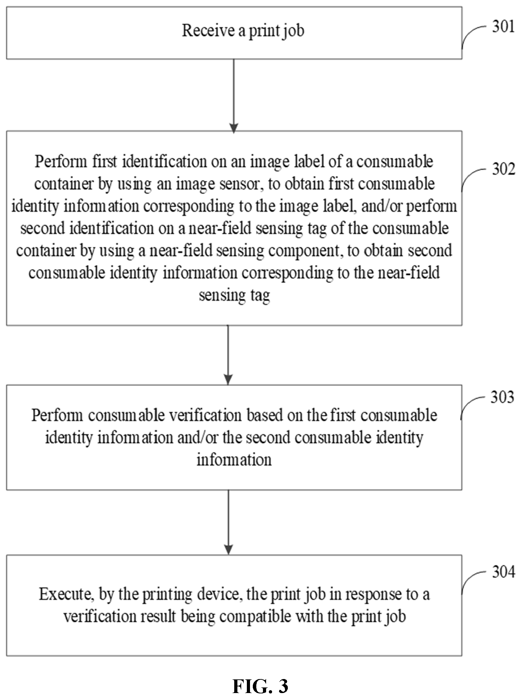

FIG. 3 is a schematic flowchart of a printing method based on consumable management according to an embodiment of the present application. The printing method in FIG. 3 may be applied to the printing device shown in FIG. 2, and the printing device includes an image sensor and a near-field sensing component. The method includes the following steps 301 to 304.

Step 301: a print job is received.

In this step, the printing device receives the print job from an electronic device communicatively connected to the printing device, where the electronic device usually issues the print job to the printing device after completing printing parameter configuration (such as model slicing, material type selection, precision setting, etc.) and triggering a printing instruction. The electronic device and the printing device may form a master-slave control relationship, where the electronic device serves as a control terminal for job initiation and parameter configuration, and the printing device serves as an execution terminal for implementation of the print job. In practical applications, the electronic device and the printing device can also be indirectly connected through a cloud server, the electronic device uploads the print job to the cloud, and then the printing device synchronously acquires the job data from the cloud, which is not limited in this embodiment.

In this embodiment, the communication connection between the printing device and the electronic device is a wireless connection, such as Wi-Fi, Bluetooth, or NFC. In practical applications, the printing device and the electronic device may also realize communication connection through wired connection, such as USB data line, Ethernet, etc., or communication connection through industrial bus, such as RS485 bus, CAN bus, or communication connection through technologies such as near field optical communication, radio frequency communication, etc., which is not limited in this embodiment, as long as the delivery of print jobs can be realized, and the specific connection mode can be selected according to the network environment and transmission requirements of the application scenario.

Step 302: first identification is performed on an image label of a consumable container by using an image sensor, to obtain first consumable identity information corresponding to the image label, and/or second identification is performed on a near-field sensing tag of the consumable container by using a near-field sensing component, to obtain second consumable identity information corresponding to the near-field sensing tag.

In this embodiment, the printing device is provided with an image sensor (such as a monocular or multi-lens camera or a camera array) for implementing image recognition (i.e., first identification), and a near-field sensing component (such as an NFC card reader) for implementing near-field communication recognition (i.e., second identification). Correspondingly, an image label (such as a one-dimensional barcode, a two-dimensional barcode, or a specific graphic code) and a near-field sensing tag (such as an NFC chip) corresponding to the foregoing recognition manner are disposed on the consumable container used for holding the printing consumable.

In one example, the image label is disposed on the side or top of the consumable container, such as a resin capsule.

Based on this setting, when receiving the print job, the printing device issues an identification instruction to the image sensor and/or the near-field sensing component, and the image sensor performs first identification on the image label on the consumable container in response to the identification instruction to obtain the first consumable identity information; and the near-field sensing component performs second identification on the near-field sensing tag on the consumable container in response to the identification instruction to obtain the second consumable identity information.

In an example, the printing device is configured to issue an identification instruction to the image sensor when the image label of the consumable container enters the field of view of the image sensor. Correspondingly, the first identification is performed after the image label of the consumable container enters the field of view of the image sensor.

Specifically, the printing device may analyze a preview image collected by the image sensor in real time, and when it detects that an image label contour that meets preset characteristics (for example, a rectangular border of a two-dimensional barcode or geometric features of a specific graphic code) appears in the image, and a proportion of the contour in the image exceeds a preset threshold (for example, 30%), the printing device determines that the image label has entered the field of view, and then triggers an identification instruction for controlling the image sensor.

In practical applications, the printing device may also monitor definition parameters (such as contrast and sharpness) of the image in real time through the image sensor, and when it is detected that there is an image region meeting a preset definition threshold in the image, and the geometric shape of the region matches a pre-stored image label template above a set ratio (such as 80%), it is determined that the image label has entered the field of view and the identification instruction is triggered, which is not limited in this embodiment.

In an example, the printing device is further configured to issue an identification instruction to the near-field sensing component when the consumable container is placed in an accommodating cavity of the printing device and the near-field sensing component detects the near-field sensing tag. Correspondingly, the second identification is performed after the consumable container is placed in the accommodating cavity of the printing device and the near-field sensing component detects the near-field sensing tag.

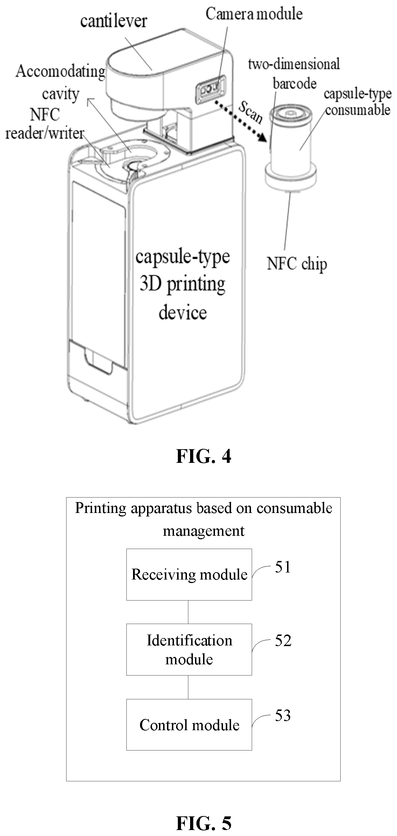

In some examples, the near-field sensing component is disposed at the bottom of the accommodating cavity of the 3D printing device that accommodates the consumable container such as the resin capsule, and is positioned to avoid the optical path of the 3D printing device's light engine that irradiates the build platform of the resin capsule. For example, referring to FIG. 4, the outer housing of the resin capsule may include a first outer housing and a second outer housing. The second outer housing is located on a lower side of the first outer housing, a circumferential size of the second outer housing is greater than a circumferential size of the first outer housing, and the second outer housing is designed to fit the accommodating cavity of the 3D printing device, so that the accommodating cavity may accommodate the resin capsule. The near-field sensing component is placed in a portion of the accommodating cavity corresponding to the second outer housing rather than corresponding to the first outer housing, so that the near-field sensing component does not interfere with the optical path of the light engine irradiating the build platform, thereby avoiding affecting photo-polymerization.

It can be understood that the resin capsule may further include an inner housing that can move in a vertical direction, so that the object to be produced grows layer by layer starting from the build platform at the bottom of the resin capsule. In this case, each time the inner housing of the resin capsule moves upward by one layer, the remaining resin inside the inner housing will automatically flow (due to gravity) into the layer between the build platform and the inner housing, thereby making layer-by-layer construction possible.

In an example, the near-field sensing tag is disposed on the second outer housing of the consumable container such as the resin capsule, for example, on the bottom or side of the second outer housing, or on the transition platform between the second outer housing and the first outer housing.

In another example, the near-field sensing tag is disposed on the first outer housing of the consumable container, such as a resin capsule, for example, on the top or side of the first outer housing.

In an example, the printing device detects whether there is an object placed in the accommodating cavity through a pressure sensor or a photoelectric sensor installed inside the accommodating cavity: when the pressure sensor detects that a pressure value exceeds a preset threshold, or an optical path of the photoelectric sensor is blocked, it is determined that the consumable container has been placed in the accommodating cavity; meanwhile, the near-field sensing component scans for changes of the surrounding electromagnetic field in real time, and when a signal response (such as a carrier signal of a specific frequency) conforming to the characteristics of the near-field sensing tag is detected, it is determined that the near-field sensing tag has been detected. When both conditions are satisfied, an identification instruction for controlling the near-field sensing component is triggered.

In an example, the printing device may also detect whether the consumable container has been placed using an ultrasonic sensor mounted on the top of the accommodating cavity: when the echo reflection time of the acoustic wave signal emitted by the ultrasonic sensor is less than a preset threshold (i.e., the distance to the object is detected to be within the depth range of the accommodating cavity), it is determined that the consumable container has been placed into the accommodating cavity; at the same time, the near-field sensing component detects changes in the received signal strength, and when the signal strength exceeds a preset sensing threshold and remains stable (for example, three consecutive detections all meet the condition), it is determined that the near-field sensing tag has been detected. When both conditions are satisfied, the identification instruction is triggered, which is not limited in the present embodiment.

In an example, the printing device is further configured to issue an identification instruction to the near-field sensing component when the consumable container is correctly installed in the accommodating cavity. Correspondingly, the second identification is performed after the consumable container is placed in the accommodating cavity of the printing device and correctly installed in the accommodating cavity and the near-field sensing component detects the near-field sensing tag.

In an example, the printing device detects whether the consumable container is correctly installed in the accommodating cavity of the printing device through infrared detection; and in response to the consumable container being correctly installed, the printing device determines to use the near-field sensing component to perform the second identification on the near-field sensing tag of the consumable container.

More specifically, an infrared transmitter and receiver are mounted at preset positions on the inner wall of the accommodating cavity, and when the consumable container is not correctly mounted, an edge of the consumable container blocks the infrared optical path, and the receiver cannot receive a complete signal. When the container is fully inserted and triggers the locking mechanism (for example, the snap-fit is engaged), the infrared optical path is unobstructed, and the receiver receives a continuous and stable infrared signal. Based on this, the printing device determines that the installation is correct, and synchronously starts the second identification in combination with the signal detection result of the near-field sensing component.

As another possible implementation, the printing device is provided with a limit sensing switch on the installation path of the consumable container. When the consumable container is installed in place, the limit sensing switch is triggered, and the controller determines the installation state by detecting the trigger signal of the switch.

It should be understood that, in practical applications, other methods may also be used to determine whether the consumable container is correctly installed, such as using a camera installed above the accommodating cavity to identify whether a specific mark on the consumable container is located in a predetermined area in the image through a visual algorithm, so as to determine whether the installation position is accurate, which is not limited in this embodiment.

In addition, in practical applications, the printing device may also realize identification in a timed triggering manner. For example, after receiving a print job, the printing device cyclically issues an identification instruction to the image sensor and the near-field sensing component at preset intervals (e.g., every 1 second) until the two types of identity information are successfully acquired; or, identification may be triggered manually: after the consumable container is placed, the user presses an identification button on the device or issues an instruction through a communicatively connected electronic device, and the printing device starts the first identification and the second identification in response to the button signal, which is not limited in this embodiment.

In this embodiment, the configuration of the printing device achieves accurate triggering of the identification process by combining physical state (such as position, installation state) detection and identification condition determination, avoiding the occupation of device resources by invalid identification operations. At the same time, by confirming the physical installation state before performing consumable identity identification, it effectively distinguishes and handles two different types of issues: improper physical installation and identity identification failure. In this way, it not only reduces invalid identification processes triggered by simple installation errors, thereby improving system efficiency, but also provides users or maintenance personnel with clearer and more targeted error information when a fault occurs, effectively enhancing usability and maintainability of the system.

In some embodiments, the image label and/or the near-field sensing tag are non-erasable and non-re-writable, while in other embodiments, the image label and/or the near-field sensing tag are erasable and re-writable.

In some embodiments, the first consumable identity information and the second consumable identity information include at least one of: manufacturer information of the consumable, a remaining print count, a remaining material amount, and a material type. The manufacturer information is used to confirm whether the consumable is from an authorized supplier approved by the printing device, thereby avoiding the use of an unauthorized third-party consumable that may affect print quality. The remaining print count and the remaining material amount can be used to determine whether the consumable meets the consumption requirement of the current print job, thereby preventing print interruption due to insufficient consumable. The material type is used to ensure that the consumable matches material specifications required by the print job (such as resin type for 3D printing, ink type for photo printing, etc.), ensuring that the output meets expectations.

It can be understood that the remaining print count and the remaining material amount can avoid the case that after one or more print jobs, the consumable container (such as a resin capsule) is refilled with new resin by machine, manually or in other ways, resulting in a single resin capsule being repeatedly used to perform print jobs that exceed the print count and/or material amount. This non-original/non-genuine method of refiling the consumable container will not only damage the consumable container, but also affect the printing accuracy due to improper use of resin materials. Thus, it can be seen that the remaining print count and the remaining material amount can prevent improper reuse of the consumable container.

Step 303: consumable verification is performed based on the first consumable identity information and/or the second consumable identity information.

It can be understood that the printing device performs consumable verification based on the first consumable identity information and/or the second consumable identity information, specifically, the printing device sequentially or simultaneously verifies the manufacturer of the consumable container, verifies the remaining print count of the consumable container, and verifies the material type of the consumable in the consumable container.

For example, when verifying the manufacturer, the printing device compares a manufacturer identifier (such as a manufacturer code and a digital certificate) in the consumable identity information with a whitelist of authorized manufacturers (or an authentication list obtained from the cloud through an encrypted channel) pre-stored in a memory (such as a memory in the printing device or a cloud memory). If the identifier is within the whitelist and passes verification (for example, certificate signature is verified as valid), the manufacturer is determined to be legitimate. When verifying the remaining print count, the printing device reads the remaining available number of uses recorded in the consumable identity information (this number is solidified data written at the time of consumable manufacturing or updated through previous use). If the remaining number of uses is greater than 0 (that is, the consumable is not exhausted), it is determined that the current consumable meets the usage conditions. When verifying the material type, the printing device extracts the material specification parameters (such as material composition code or applicable standard code) recorded in the consumable identity information, and matches them against the material type library supported by the printing device. If the material specification parameters fall within the device's compatibility range, the material type is determined to be legitimate.

In practical applications, when performing verification, the printing device may also perform verification through any one or more of manufacturer information, a remaining print count, a remaining material amount, and a material type, which is not limited in this embodiment.

It should be understood that when any item fails verification, the consumable is determined to be unauthorized, the printing device is immediately controlled or directed to stop starting the print job, and the user is prompted to replace the compliant consumable via an indicator light, voice, or the like.

Step S304: in response to a verification result being compatible with the print job, the printing device executes the print job.

Further, the printing device determines whether the consumable is compatible with the print job in combination with the verification result. Specifically, the printing device determines compatibility between the manufacturer of the consumable container and the manufacturer required by the print job, determines compatibility between the remaining print count of the consumable container and the print count required by the print job, and verifies compatibility between the material type of the consumable in the consumable container and the material type required by the print job.

For example, the printing device extracts required manufacturer code, required print count (calculated based on parameters such as job model size and layer thickness), and specified material type from parameters of the print job. Subsequently, the manufacturer information of the consumable passing the verification is matched with the manufacturer code required by the job, and if they are consistent, it is determined that the manufacturer is adapted; the remaining print count of the consumable is compared with the print count required by the job, and if the remaining print count is greater than or equal to the required print count, it is determined that the remaining print count is adapted; the material type of the consumable is compared with the specified material type of the job, and if they are completely matched, it is determined that the material type is adapted. Only when all three items are adapted, is the overall compatibility determined as satisfied.

In some examples, when performing the compatibility determination, the printing device may also perform the determination through any one or two of the manufacturer information, the remaining print count, and the material type, which is not limited in this embodiment.

In some embodiments, when all items of the foregoing compatibility determination results indicate compatibility, the printing device is controlled to execute the print job. Otherwise, it is determined that the verification result is not compatible with the print job, the printing device is prohibited from starting the print job, and a mechanism for incompatibility prompt is triggered.

In some examples, a two-dimensional barcode may be printed on the outer housing of the resin capsule, and a two-dimensional barcode scanner is fixedly mounted on the 3D printing device. However, when the user inserts the resin capsule, there may be positional or orientational deviations that cause the two-dimensional barcode to fail to align with the scanning window; or the two-dimensional barcode on the outer housing of the resin capsule may become blurred due to friction from external contact; or the light conditions during scanning may not be ideal. All these factors can easily lead to the failure of a single two-dimensional barcode identification manner, so that the device cannot identify consumable and refuses work, which seriously affects the user experience.

In other examples, the two-dimensional barcode on the outer housing of the resin capsule is susceptible to forgery and replication. For instance, the two-dimensional barcode may be directly copied from the outer housing of an authentic resin capsule and reproduced on the outer housing of a counterfeit resin capsule. This may prevent the 3D printing device from correctly determining the authenticity of the resin capsule, thereby executing print jobs erroneously.

Therefore, before performing the consumable verification, an embodiment of this application may further include:
in response to the first consumable identity information and the second consumable identity information being the same, performing consumable verification based on the first consumable identity information and/or the second consumable identity information.

Before verification, the printing device first determines whether the first consumable identity information is the same as the second consumable identity information. Specifically, the printing device compares the first consumable identity information with the second consumable identity information field by field according to preset fields (such as manufacturer information, unique identifier, material parameters, etc.). If the content of all preset fields is completely identical (including no difference in characters, values, encoding formats, etc.), the two are determined to be the same. If the content of at least one preset field does not match (such as character error, numerical deviation, encoding format mismatch, etc.), the two are determined to be different.

When the first consumable identity information is the same as the second consumable identity information, the printing device performs consumable verification based on the first consumable identity information and/or the second consumable identity information. Specifically, the printing device verifies, sequentially or simultaneously, the manufacturer of the consumable container, the remaining print count of the consumable container, and the material type of the consumable within the consumable container.

By applying the method of the present application, in a 3D printing scenario based on a capsule type consumable container, even if image identification is affected by positional or orientation deviations during insertion of the consumable container, two-dimensional barcode wear, or poor illumination, the stability of identity information acquisition can still be ensured through near-field sensing identification. At the same time, the consistency verification of the dual-tag information can effectively prevent the use of counterfeit capsules (that only counterfeit the two-dimensional barcode on the surface without a matching near-field sensing tag). This not only addresses the issue of a single identification manner being prone to failure, but also improves the accuracy and security of consumable verification, and effectively optimizes the user experience and device reliability in plug-and-play scenarios.

In some embodiments, in response to the incompatibility between the verification result and the print job, the display interface of the electronic device communicatively coupled to the printing device prompts the incompatibility, or the display interface of the printing device prompts the incompatibility.

In some examples, if the manufacturer of the consumable container is incompatible, the display interface outputs "The current consumable manufacturer is not authorized, and it is recommended to use compliant consumable from XX brand." If the remaining number of uses of the consumable container is insufficient, it is displayed that "Insufficient remaining consumable uses (X times). The current job needs Y times. Please replace with new consumable." If the remaining material amount in the consumable container is insufficient, it is displayed that "The remaining material amount is xx ml. The current job needs xx ml. Please replace with new consumable." If the material type of the consumable container is incompatible, it is displayed that "The consumable type is XX, which does not match the YY required by the job. Please replace with the corresponding type of consumable." The prompt message is accompanied by a flashing red indicator light, and the electronic device prompt may include a hyperlink labeled "View a compatible consumable list".

In this embodiment, by performing consumable legitimacy verification and job compatibility determination in a layered manner, it is ensured that the consumable accessed by the device is genuine and meets basic usage conditions. Furthermore, through accurate matching with job parameters, printing failures caused by incompatible consumable are avoided. This dual safeguard improves the stability of printing quality. In addition, when incompatibility occurs, prompting the user via an electronic device helps the user quickly locate the problem and take a corresponding measure (changing the manufacturer, replenishing usage counts, or replacing the type), thereby reducing troubleshooting time and effectively improving user operation experience.

In addition, in some embodiments, the printing device is further configured to: in response to a failure of the first identification and/or the second identification, display a prompt on a display interface of an electronic device communicatively connected to the printing device, or on a display interface of the printing device.

In some embodiments, the first identification failure includes: the image sensor failing to identify an image label for a preset consecutive number of times (for example, 3 times), or the identified image label information being incomplete or unparsable (for example, decoding failure due to a damaged two-dimensional barcode). A failure of the second identification includes: the near-field sensing component failing to detect a near-field sensing tag signal within a preset time period (for example, 5 seconds), or the received signal being unparsable for valid identity information (for example, data reading failure due to a damaged RFID tag). If either identification manner meets the foregoing situation, it is determined that the corresponding identification has failed.

In some examples, an identification failure may also be confirmed by setting a confidence threshold of the identification information. For example, after the image sensor identifies an image label, if the confidence level of the match between the parsed first consumable identity information and a pre-stored data format is lower than a preset value (such as 60%), a failure of the first identification is determined. After the near-field sensing component parses a signal, if the integrity check of valid data fails (such as a data check bit error), a failure of the second identification is determined. However, the embodiments of this application are not limited thereto.

Through this setting, when an anomaly occurs during the identification process, a specific fault type (for example, "Two-dimensional barcode identification failed, please adjust the position of the consumable", "No sensing tag detected, please check whether the consumable is an authentic product") can be fed back to the user in time, helping the user quickly locate the problem and take targeted measures (for example, reposition the consumable, and replace with compliant consumable), thereby avoiding a non-responsive state of the device caused by the identification failure, and improving fault processing efficiency and user operation experience.

In the method provided in the embodiments of this application, first identification is performed on an image label of a consumable container by using an image sensor to obtain first consumable identity information, while second identification is performed on a near-field sensing tag of the consumable container by using a near-field sensing component to obtain second consumable identity information. After confirming that the two types of identity information are the same, consumable verification is performed based on such identity information, and when the verification result is compatible with the print job, the print job is performed. According to the method provided by the embodiments of this application, on one hand, it effectively avoids the problem that a single identification manner (for example, relying only on a two-dimensional barcode) is prone to failure due to physical damage, positional deviation, environmental interference, and other factors, thereby ensuring the stability of consumable identity information acquisition. On the other hand, consistency check and compliance verification of identity information can accurately identify counterfeit consumable (for example, inferior products that only counterfeit the surface label without a matching near-field tag), ensuring consumable legitimacy from the source. At the same time, through compatibility determination with the print job, printing failures or quality issues caused by mismatched consumable are avoided, finally enhancing system reliability and security while effectively improving the user's operational experience.

In some embodiments, the printing device is further configured to: in response to the first consumable identity information being different from the second consumable identity information, acquire current environment information via a sensing device of the printing device; dynamically evaluate current reliability of the first consumable identity information and the second consumable identity information based on the current environment information; perform consumable verification based on target consumable identity information with higher current reliability, and in response to a verification result being compatible with the print job, cause the printing device to perform the print job.

In some embodiments, the current environmental information includes at least one of light intensity, electromagnetic signal strength, and environmental obstruction information. Based on this, the printing device may pre-store influence weights of different environmental factors on reliability of different identification manners (for example, the weight of light intensity on the image identification manner is 0.6, while its weight on the NFC identification manner is 0.1; the weight of electromagnetic signal strength on the NFC identification manner is 0.7, while its weight on the image identification manner is 0.1). That is, each environmental factor has different influence weights on different identification manners. The printing device normalizes the currently collected environmental information values, multiplies the normalized environmental information values by the corresponding weights, and sums the results to calculate a current reliability score of each identification manner. The identification manner with the highest score is the one with the highest current reliability. Further, the printing device selects the consumable identity information read by the identification manner with the highest reliability score as the final valid information, and performs the subsequent consumable verification process based on this information.

It should be understood that, in practical applications, evaluation may also be performed by using a single indicator. For example, the reliability of a two-dimensional barcode identification manner may be evaluated based solely on light intensity, and when the light intensity is within an appropriate range, the two-dimensional barcode identification manner is determined to have high reliability; otherwise, its reliability is low. Similarly, the reliability of an NFC identification manner may be evaluated based solely on electromagnetic signal strength, and when the electromagnetic signal strength is within a stable range, the NFC identification manner is determined to have high reliability; otherwise, its reliability is low. However, the embodiments of the present application are not limited thereto.

In some embodiments, the printing device is further configured to: in response to the first consumable identity information being different from the second consumable identity information, obtain a user feedback instruction via an instruction input device; in response to the user feedback instruction, perform consumable verification based on target consumable identity information determined from the first consumable identity information and the second consumable identity information, and in response to the verification result being compatible with the print job, cause the printing device to perform the print job.

Specifically, when the printing device detects that the identification results are inconsistent, a prompt box will pop up on a human-computer interaction interface (such as a touch screen) of the printing device, listing the inconsistent identification results and their corresponding identification manners, and prompting the user to manually select which result to trust. The printing device will determine the target identification manner for final verification and its corresponding consumable identity information based on the option selected by the user's touch.

It should be understood that, in practical applications, other implementations may also be used when executing based on the user feedback instruction. For example, the user may receive a notification and make a remote selection through a matched mobile application when a conflict occurs, or the user may pre-configure a default selection preference for conflicts in the settings (such as "always prioritize NFC identification result"). when a conflict occurs in settings in advance. However, the embodiments of this application are not limited thereto.

In the above process, by dynamically evaluating the reliability of the identification manner in combination with the current environmental information, a more suitable verification basis can be flexibly selected according to the actual usage scenario, thereby avoiding verification errors caused by environmental interference and ensuring the accuracy of consumable identity information. In addition, a manner in which a user feedback selection is provided, fully respects user habits and judgement, accommodates different users' trust preferences for identification manners, and further improves system usability. At the same time, the design of multiple implementation methods breaks the limitations of a single verification logic, enhances the flexibility and adaptability of the consumable verification process, and enables better handling of complex and diverse usage scenarios, thereby more comprehensively meeting market customers' needs for automatic data identification and information collection, and ensuring the security and reliability of consumable management.

For example, FIG. 4 is a schematic diagram of a mechanical structure of a printing device according to an embodiment of this application. Specifically, the printing device shown in FIG. 4 may be the capsule-type 3D printing device described above herein, which uses a consumable container such as a resin capsule. Before performing 3D printing, identity identification is performed on the resin capsule, and after the identity verification is passed, a printing operation is performed on the resin capsule placed in the accommodating cavity (printing area).

More specifically, in this example, the printing device may be provided with a camera on a side wall of a cantilever for scanning a two-dimensional barcode on the surface of the resin capsule. As shown in FIG. 4, image identification is realized through the camera module to collect the two-dimensional barcode information on the surface of the resin capsule. Referring to the foregoing description herein, the printing device may be provided with a near-field sensing component such as an NFC reader/writer module at the bottom of the accommodating cavity, for reading the NFC chip of the resin capsule placed in the printing area. Near-field communication identification is realized through the NFC reader/writer module, to read information from the NFC chip built in the resin capsule.

It should be understood that in practical applications, the camera module may also be disposed at the bottom or the front end surface of the cantilever of the printing device. For example, a bottom camera of the cantilever may scan a two-dimensional barcode on the top of the resin capsule from a top view angle. The NFC reader/writer module may also be integrated into a side wall of the accommodating cavity. For example, an NFC reader/writer on the side wall of the accommodating cavity may read NFC chip information from the side after the resin capsule is placed properly. However, the embodiments of the present application are not limited thereto.

It can be understood that the cantilever described herein is located on the top of the printing device and can be adapted to the resin capsule, for example, designed to cooperate with an inner housing of the resin capsule, so that the inner housing can move in a vertical direction through the movement of the cantilever.

FIG. 5 is a schematic structural diagram of a printing apparatus based on consumable management according to an embodiment of the present application. The printing apparatus may be applied to the printing device in the above example, where the printing device includes an image sensor and a near-field sensing component. The printing apparatus includes:
a receiving module 51, configured to receive a print job;
an identification module 52, configured to perform first identification on an image label of a consumable container by using the image sensor to obtain first consumable identity information corresponding to the image label, and/or perform second identification on a near-field sensing tag of the consumable container by using the near-field sensing component to obtain second consumable identity information corresponding to the near-field sensing tag;
a control module 53, configured to perform consumable verification based on the first consumable identity information and/or the second consumable identity information in response to the first consumable identity information and the second consumable identity information being the same;
the control module 53 is further configured to execute, by the printing device, the print job in response to a verification result being compatible with the print job.

For the detailed description of the printing apparatus based on consumable management, please refer to the description of the related method steps in the above embodiments, and the implementation principles and technical effects thereof are similar, which will not be repeated here.

An embodiment of this application further provides a non-transitory computer-readable storage medium storing computer-executable instructions, where when the computer-executable instructions are executed by a processor, the method in any one of the foregoing embodiments is implemented.

An embodiment of this application further provides a computer program product, including a computer program, where when the computer program is executed by a processor, the method in any one of the foregoing embodiments is implemented.

An embodiment of this application further provides a printing system, including a printing device and an electronic device communicatively coupled to the printing device, where the printing device includes an image sensor and/or a near-field sensing component, and the printing device is configured to:
receive a print job transmitted by an electronic device;
perform first identification on an image label of a consumable container by using the image sensor to obtain first consumable identity information corresponding to the image label, and/or perform second identification on a near-field sensing tag of the consumable container by using the near-field sensing component to obtain second consumable identity information corresponding to the near-field sensing tag;
in response to the first consumable identity information and the second consumable identity information being the same, perform consumable verification based on the first consumable identity information and/or the second consumable identity information; and
in response to a verification result being compatible with the print job, execute, by the printing device, the print job;
the electronic device is configured to:
   transmit the print job to the printing device.

In an embodiment, the first identification is performed after the image label of the consumable container enters a field of view of the image sensor.

In an embodiment, the second identification is performed after the consumable container is placed in an accommodating cavity of the printing device and the near-field sensing component senses the near-field sensing tag.

In an embodiment, the printing device is specifically configured to:
verify a manufacturer of the consumable container; and/or
verify a remaining print count and/or a remaining material amount of the consumable container; and/or
verify a material type of the consumable in the consumable container.

In an embodiment, when determining the verification result being compatible with the print job, the printing device is specifically configured to:
determine the manufacturer of the consumable container being compatible with a manufacturer required by the print job; and/or
determine the remaining print count of the consumable container being compatible with a print count required by the print job; and/or
verify the material type of the consumable in the consumable container being compatible with a material type required by the print job.

In an embodiment, the printing device is further configured to:
in response to the verification result being incompatible with the print job, prompt a notice of the incompatibility on a display interface of an electronic device communicatively coupled to the printing device, or prompt a notice of the incompatibility on a display interface of the printing device.

In an embodiment, the printing device is further configured to:
in response to the first identification and/or the second identification failing, prompt on a display interface of an electronic device communicatively connected to the printing device, or prompt on a display interface of the printing device.

In an embodiment, the printing device is further configured to:
in response to the first consumable identity information and the second consumable identity information being the same, perform consumable verification based on the first consumable identity information and/or the second consumable identity information.

In an embodiment, the printing device is further configured to:
in response to the first consumable identity information being different from the second consumable identity information, obtain current environment information via a sensing device communicatively connected to the printing device;
dynamically evaluate current reliability of the first consumable identity information and the second consumable identity information based on the current environment information;
perform consumable verification based on target consumable identity information having higher current reliability from the first consumable identity information and the second consumable identity information, and perform, by the printing device, the print job in response to a verification result being compatible with the print job;
   or
obtain a user feedback instruction through an instruction input device communicatively connected to the electronic device in response to the first consumable identity information being different from the second consumable identity information; and
perform consumable verification based on target consumable identity information determined from the first consumable identity information and the second consumable identity information in response to the user feedback instruction, and perform, by the printing device, the print job in response to a verification result being compatible with the print job.

In an embodiment, the printing device is further configured to:
detect whether the consumable container is correctly installed in an accommodating cavity of the printing device by infrared rays;
in response to the consumable container being correctly installed, determine to use the near-field sensing component to perform the second identification on the near-field sensing tag of the consumable container.

According to the printing system of the embodiment of this application, the printing device is configured with the dual identification modules of the image sensor and the near-field sensing component, and in combination with the identity information consistency verification, the consumable compliance verification, the job compatibility determination, and the abnormal scenario coping mechanism (the identification failure prompt, the identity information conflict dynamic evaluation/user selection), the accurate identification, the legal verification, and the job compatibility management of the identity of the consumable are realized, which not only avoids the problem that a single identification manner is prone to failure, but also protects against the use risk of counterfeit consumable, and at the same time improves the system adaptability through the clear abnormality prompt and the flexible conflict processing, and finally ensures the reliability, security, and user experience of the print job.

An embodiment of this application further provides a printing method, applied to the foregoing printing system, where the printing system includes a printing device and an electronic device communicatively coupled to the printing device, the printing device includes an image sensor and/or a near-field sensing component, and the method includes:
transmitting, by the electronic device, a print job to a printing device;
receiving, by the printing device, the print job transmitted by the electronic device;
performing, by the printing device, first identification on an image label of a consumable container by using the image sensor to obtain first consumable identity information corresponding to the image label, and/or performing, by the printing device, second identification on a near-field sensing tag of the consumable container by using the near-field sensing component to obtain second consumable identity information corresponding to the near-field sensing tag;
performing, by the printing device, consumable verification based on the first consumable identity information and/or the second consumable identity information in response to the first consumable identity information and the second consumable identity information being the same; and
executing, by the printing device, the print job in response to a verification result being compatible with the print job.

It can be understood that the printing system can also perform any suitable method or step or flow in the foregoing embodiments of this application, which can be incorporated into the method examples performed by the printing system by reference, and will not be repeated here.

In the several embodiments provided in this application, it should be understood that the disclosed device and method may be implemented in other manners. For example, the device embodiments described above are only illustrative, for example, the division of modules is only a logical function division, and there may be other division manners in actual implementation, for example, multiple modules may be combined or may be integrated into another system, or some features may be ignored or not executed.

The integrated module implemented in the form of a software functional module may be stored in a computer-readable storage medium. The software function module is stored in a storage medium, and includes several instructions used to enable a computer device (which may be a personal computer, a server, a network device, or the like) or a processor to perform some steps of the methods in the embodiments of this application.

It should be understood that the processor may be a Central Processing Unit (CPU for short), or may be another general-purpose processor, a Digital Signal Processor (DSP for short), an Application Specific Integrated Circuit (ASIC for short), or the like. The general-purpose processor may be a microprocessor, or the processor may be any conventional processor or the like. The steps of the methods disclosed with reference to this application may be directly performed by a hardware processor, or may be performed by a combination of hardware and software modules in the processor. The memory may include a high-speed random access memory (RAM), or may further include a non-volatile memory (NVM), for example, at least one magnetic disk memory, or may be a USB flash drive, a removable hard disk, a read-only memory, a magnetic disk, or an optical disc, etc.

The storage medium may be implemented by any type of volatile or non-volatile storage device or a combination thereof, such as a static random-access memory (SRAM), an electrically erasable programmable read-only memory (EEPROM), an erasable programmable Read-Only Memory (EPROM), a programmable read-only memory (PROM), a Read-Only Memory (ROM), a magnetic memory, a flash memory, a magnetic disk or an optical disk. The storage medium may be any available medium that can be accessed by a general-purpose or special-purpose computer.

An exemplary storage medium is coupled to the processor such that the processor can read information from, and write information to, the storage medium. Of course, the storage medium may also be an integral part of the processor. The processor and the storage medium may be located in an application-specific integrated circuit (ASIC). Certainly, the processor and the storage medium may also exist as discrete components in an electronic device or a main control device.

It should be noted that, in this specification, the terms "include", "comprise", or any other variants thereof are intended to cover non-exclusive inclusion, so that a process, method, product, or apparatus that includes a list of elements includes not only those elements, but also other elements that are not explicitly listed, or elements inherent to such a process, method, product, or apparatus. Without more limitations, an element defined by the phrase "including a ..." does not exclude the presence of other identical elements in the process, method, product, or apparatus that includes the element.

The foregoing serial numbers of the embodiments of this application are merely for description purposes, and do not indicate the superiority or inferiority of the embodiments.

Through the description of the above embodiments, those skilled in the art can clearly understand that the methods of the above embodiments can be implemented by software plus a necessary general-purpose hardware platform, and of course, can also be implemented by hardware, but in many cases, the former is a better implementation. Based on such understanding, the technical solution of the present application, in essence or the part contributing to the prior art, may be embodied in the form of a software product, and the computer software product is stored in a storage medium (such as ROM/RAM, magnetic disk, or optical disk), and includes several instructions to enable a terminal device (which may be a mobile phone, a computer, a server, an air conditioner, or a network device, etc.) to perform the methods of various embodiments of the present application.

In the technical solution of this application, the collection, storage, use, processing, transmission, provision, disclosure and other processing of user data and other information involved are all in compliance with the provisions of relevant laws and regulations, and do not violate public order and good customs.

The above are only preferred embodiments of the present application and are not intended to limit the patent scope of the present application, and any equivalent structure or equivalent process transformation made by using the contents of the specification and drawings of the present application, or any direct or indirect application in other related technical fields, are all included within the patent protection scope of the present application.

## Claims

1. A printing method based on consumable management, applied to a printing device (200), wherein the printing device comprises an image sensor (201) and/or a near-field sensing component (202), the method comprising:
(301) receiving a print job;
(302) performing first identification on an image label of a consumable container by using the image sensor to obtain first consumable identity information corresponding to the image label, and/or performing second identification on a near-field sensing tag of the consumable container by using the near-field sensing component to obtain second consumable identity information corresponding to the near-field sensing tag;
(303) performing consumable verification based on the first consumable identity information and/or the second consumable identity information; and
(304) executing, by the printing device, the print job in response to a verification result being compatible with the print job.

2. The method according to claim 1, wherein the first identification is performed after the image label of the consumable container enters a field of view of the image sensor.

3. The method according to claim 1, wherein the second identification is performed after the consumable container is placed in an accommodating cavity of the printing device and the near-field sensing component senses the near-field sensing tag.

4. The method according to claim 1, wherein performing consumable verification based on the first consumable identity information and/or the second consumable identity information comprises at least one of:
verifying a manufacturer of the consumable container;
verifying a remaining print count and/or a remaining material amount of the consumable container; or
verifying a material type of consumable in the consumable container.

5. The method according to claim 4, wherein determining the verification result being compatible with the print job, comprising at least one of:
determining the manufacturer of the consumable container being compatible with a manufacturer required by the print job;
determining the remaining print count of the consumable container being compatible with a print count required by the print job; or
verifying the material type of the consumable in the consumable container being compatible with a material type required by the print job.

6. The method according to claim 1, further comprising:
in response to the verification result being incompatible with the print job, prompting a notice of the incompatibility on a display interface of an electronic device communicatively coupled to the printing device, or prompting the incompatibility on a display interface of the printing device.

7. The method according to claim 1, further comprising:
in response to the first identification and/or the second identification failing, prompting a notice on a display interface of an electronic device communicatively connected to the printing device, or prompting a notice on a display interface of the printing device.

8. The method according to claim 1, wherein performing consumable verification based on the first consumable identity information and/or the second consumable identity information comprises:
in response to the first consumable identity information and the second consumable identity information being the same, performing consumable verification based on the first consumable identity information and/or the second consumable identity information.

9. The method according to claim 1, further comprising:
in response to the first consumable identity information being different from the second consumable identity information, obtaining current environment information via a sensing device of the printing device;
determining current reliability of the first consumable identity information and the second consumable identity information based on the current environment information; and
performing consumable verification based on target consumable identity information having higher current reliability from the first consumable identity information and the second consumable identity information, and performing, by the printing device, the print job in response to a verification result being compatible with the print job;
or
obtaining a user feedback instruction in response to the first consumable identity information being different from the second consumable identity information; and
performing consumable verification based on target consumable identity information determined from the first consumable identity information and the second consumable identity information in response to the user feedback instruction, and performing, by the printing device, the print job in response to a verification result being compatible with the print job.

10. The method according to any one of claims 1 to 9, wherein before performing the second identification on the near-field sensing tag of the consumable container by using the near-field sensing component, the method further comprises:
detecting an accommodating cavity of the printing device by infrared rays;
in response to the consumable container being correctly installed in the accommodating cavity of the printing device, determining to use the near-field sensing component to perform the second identification on the near-field sensing tag of the consumable container.

11. The method according to any one of claims 1 to 9, wherein the image sensor is disposed on a side wall of a cantilever of the printing device or on a bottom of the cantilever facing the accommodating cavity, the image label is disposed on a side portion or a top portion of the consumable container, the near-field sensing component is disposed at a bottom of the accommodating cavity of the printing device that accommodates the consumable container, or is disposed on an inner side of the accommodating cavity, or is disposed at a bottom of the cantilever of the printing device facing the accommodating cavity, and the near-field sensing tag is disposed on an outer housing of the consumable container.

12. A printing system comprising:
a printing device; and
an electronic device communicatively coupled to the printing device, wherein the printing device comprises an image sensor and/or a near-field sensing component, and wherein the printing device is configured to:
receive a print job transmitted by the electronic device;
perform first identification on an image label of a consumable container by using the image sensor to obtain first consumable identity information corresponding to the image label, and/or perform second identification on a near-field sensing tag of the consumable container by using the near-field sensing component to obtain second consumable identity information corresponding to the near-field sensing tag;
perform consumable verification based on the first consumable identity information and/or the second consumable identity information; and
execute, by the printing device, the print job in response to a verification result being compatible with the print job;
wherein the electronic device is configured to transmit the print job to the printing device.

13. A printing method, applied to a printing system, wherein the printing system comprises a printing device and an electronic device communicatively coupled to the printing device, the printing device comprises an image sensor and/or a near-field sensing component, the method comprising:
transmitting, by the electronic device, a print job to the printing device;
receiving, by the printing device, the print job transmitted by the electronic device;
performing, by the printing device, first identification on an image label of a consumable container by using the image sensor to obtain first consumable identity information corresponding to the image label, and/or performing, by the printing device, second identification on a near-field sensing tag of the consumable container by using the near-field sensing component to obtain second consumable identity information corresponding to the near-field sensing tag;
performing, by the printing device, consumable verification based on the first consumable identity information and/or the second consumable identity information; and
executing, by the printing device, the print job in response to a verification result being compatible with the print job.

14. A printing device, comprising at least one processor (10) and a memory (12);
wherein the memory stores computer-executable instructions;
when the computer-executable instructions stored in the memory are executed by the processor, the processor is caused to perform the method according to any one of claims 1-11.

15. A non-transitory computer-readable storage medium storing computer-executable instructions, wherein when the computer-executable instructions are executed by a processor, the method according to any one of claims 1-11 or 14 is implemented.
